# FASCICULE DE BREVET EUROPEEN

(11) **EP 0 752 191 B1**
(45) Date de publication et mention de la délivrance du brevet: **05.09.2001**
(21) Numéro de dépôt: 95914384.3
(22) Date de dépôt: 20.03.1995
(51) Int. Cl.: H04Q 7/22

(54) **PROCEDE ET EQUIPEMENTS POUR DIFFUSER DES MESSAGES VERS DES STATIONS MOBILES DE RADIOCOMMUNICATION**
VERFAHREN UND EINRICHTUNGEN FÜR NACHRICHTEN RUNDSENDUNGEN ZU MOBILEN FUNKKOMMUNIKATIONSSTATIONEN
METHOD AND EQUIPMENT FOR TRANSMITTING MESSAGES TO MOBILE RADIO STATIONS

(30) Priorité: 22.03.1994 FR 9403345
(43) Date de publication de la demande: 08.01.1997
(73) Titulaire: NORTEL NETWORKS SA, 78280 Guyancourt (FR)
(72) Inventeur: MOULY, Michel, F-91120 Palaiseau (FR)
(74) Mandataire: Loisel, Bertrand
(86) Numéro de dépôt international: FR9500337
(87) Numéro de publication internationale: WO9526112

(56) Documents cités:
- EP-A- 0 347 355
- EP-A- 0 522 631
- WO-A-94/08432

## Description

La présente invention concerne un procédé de transmission de messages depuis une infrastructure d'un réseau de radiocommunication vers des stations mobiles, ainsi que des équipements pour la mise en oeuvre de ce procédé.

Un exemple d'un tel procédé est décrit dans EP-A-0 347 555 où l'objectif est de permettre à un récepteur unique d'être à l'écoute de plusieurs émetteurs diffusant des messages d'information régulièrement mis à jour.

L'invention s'applique à la diffusion, par une station de base de l'infrastructure, de messages de service destinés a priori à toutes les stations mobiles situées dans la zone de couverture de la station de base, chaque station mobile pouvant décider de recevoir ou non ces messages de service. Les canaux de diffusion concernés peuvent notamment être des canaux de contrôle des liaisons radio si les messages de service véhiculent des signaux pour l'établissement et la gestion des communications, des canaux de diffusion de messages de service destinés à être portés à la connaissance des utilisateurs, ou encore des canaux mixtes sur lesquels seraient diffusés ces deux types de messages de service.

Pour illustrer les problèmes soulevés par la diffusion de tels messages, on considère ci-après l'exemple du système européen de radiocommunication numérique cellulaire GSM ("Groupe Spécial Mobiles"), pour lequel existe un service de diffusion de messages, appelé "SMS-CB", pour "Short Message Service Cell Broadcast". Lorsque ce service est fourni, un canal radio particulier est utilisé dans chaque cellule, et un message est diffusé environ toutes les deux secondes sur ce canal. Une station mobile équipée pour ce service lit les messages sur ce canal et les affiche sur un écran. Typiquement, les messages sont rediffusés cycliquement.

Les applications de ce service sont diverses. L'exploitant du réseau peut l'utiliser pour des informations relatives à d'autres services, comme par exemple les zones tarifaires. Il peut également être utilisé par des prestataires de service externes, par exemple pour diffuser des informations routières ou des bulletins météo.

Les messages de service se composent de 88 octets envoyés en quatre blocs successifs de même longueur, dont le premier contient quatre octets d'identification du message parmi lesquels 2 octets, soit 16 bits, sont constitués par une donnée de catégorie du message. Chaque bloc peut être reçu de façon indépendante par les stations mobiles, en ce sens que la réception d'un bloc peut être correcte que les autres blocs aient ou non été reçus correctement, et que la station mobile peut décider de recevoir ou de ne pas recevoir chaque bloc individuel.

Dans l'état actuel des spécifications publiques du système, les stations mobiles doivent recevoir au moins les premiers blocs de tous les messages, faute d'information préalable sur leurs contenus, même si l'utilisateur n'est intéressé que par certains de ces messages. Ceci tend à diminuer l'autonomie électrique des stations mobiles, chaque réception consommant de l'énergie. Or l'autonomie des stations mobiles portatives, de faible poids et donc de petite batterie, est un point important pour les utilisateurs.

Pour remédier à cet inconvénient, des études sont en cours pour réduire le nombre de réceptions nécessaires, en envoyant donc des informations au préalable. Le but est de fournir à l'avance des indications permettant à la station mobile de savoir si elle est intéressée ou non par un message donné. Les cas où elle n'est pas intéressée sont par exemple les messages d'une catégorie qui n'intéresse pas l'utilisateur (celui-ci peut programmer sont appareil pour, par exemple, lui indiquer qu'il n'est pas intéressé par les informations routières). Un autre cas est celui des messages déjà reçus. En effet, les messages sont rediffusés régulièrement, et nombreux sont ceux qui ne sont pas modifiés pendant des heures ou des jours.

Il a notamment été proposé de diffuser sur le même canal radio des messages de repérage ("schedule messages") donnant chacun des informations sur un certain nombre de messages de service qui vont être diffusés consécutivement après le message de repérage. On appelle période de repérage la période pendant laquelle sont diffusés les messages de service répertoriés dans le message de repérage. Les informations contenues dans le message de repérage incluent les catégories des différents messages à diffuser au cours de la période de repérage, de sorte qu'une station mobile qui a été programmée pour ignorer certaines catégories de message, peut s'abstenir de recevoir les messages appartenant à ces catégories, sans même avoir eu à recevoir leurs premiers blocs. Les messages de service qui seront diffusés plusieurs fois au cours de la période de repérage sont également identifiés dans le message de repérage, de sorte que la station mobile peut décider de ne recevoir ces messages qu'une seule fois au cours de la période de repérage si cette réception a lieu sans erreur. Si une erreur de transmission est détectée sur un des blocs du message reçu lors de la première diffusion, la station mobile peut encore décider de recevoir ce bloc lors de la répétition du message.

Considérons par exemple le cas où les diffusions à intervenir au cours de la période de repérage sont celles illustrées dans le tableau I. Le contenu du message de repérage est alors tel qu'indiqué dans le tableau II.

Après l'en-tête, les informations relatives aux diffusions de messages sont classées dans l'ordre dans lequel ces diffusions interviendront. Pour chaque diffusion, le premier bit indique s'il s'agit d'une première diffusion d'un message au cours de la période de repérage (0) ou d'une répétition (1), et le reste du champ désigne la catégorie du message, codée sur 15 bits pour obtenir des champs de 2 octets (dans le cas du GSM, ceci implique l'omission d'un bit de la donnée de catégorie complète qui en comporte 16 ; on n'exclut donc pas que puissent exister quelques rares cas d'ambiguïté pour les stations mobiles).

**Tableau I**

| Ordre de diffusion | Message à diffuser | Catégorie du message |
|---|---|---|
| 1 | M1 | c1 |
| 2 | M2 | c2 |
| 3 | M3 | c1 |
| 4 | M3 | c1 |
| 5 | M2 | c2 |
| 6 | M1 | c1 |

**Tableau II**

| En-tête (essentiellement le nombre de diffusions à intervenir au cours de la période de repérage, ici : 6) | |
|---|---|
| 0 | c1 |
| 0 | c2 |
| 0 | c1 |
| 1 | c1 |
| 1 | c2 |
| 1 | c1 |

Si une station mobile recevant ce message de repérage est uniquement intéressée par la catégorie c1, elle peut s'abstenir de recevoir les messages en 2ème et 5ème positions. Mais elle doit lire au moins les premiers blocs des messages en 1ère et 3ème positions. Si, par exemple, le message M3 a été correctement reçu par la station mobile avant la diffusion du message de repérage, la station mobile doit de nouveau recevoir ce même message, du moins son premier bloc, de façon superflue en 3ème position de la période courante. De plus, si la station mobile manque la réception du premier bloc de ce message en 3ème position, elle devra également recevoir de façon superflue au moins les premiers blocs des messages diffusés en 4ème et 6ème positions.

Les messages de repérage qui ont été proposés ne sont donc pas optimaux en termes d'économie des ressources énergétiques des stations mobiles. Un but principal de l'invention est d'apporter une solution qui soit plus performante à cet égard.

L'invention propose ainsi un procédé de transmission de messages depuis une infrastructure d'un réseau de radio-communication à accès multiple par répartition dans le temps vers des stations mobiles. Lesdits messages sont diffusés successivement et à intervalles réguliers vers les stations mobiles sur un canal radio particulier, et comprennent des messages de service et des messages de repérage respectivement associés à des périodes de repérage successives. Chaque message de repérage comporte des informations sur la répartition des messages de service qui vont être diffusés au cours de la période de repérage associée. Pour chaque message de service qui va être diffusé au cours d'une période de repérage, le message de repérage associé inclut une donnée indiquant si ce message de service a été diffusé au cours de la période de repérage précédente.

De cette façon, lorsqu'une station mobile a reçu les messages de repérage associés à deux périodes consécutives et qu'elle sait avoir reçu, au cours de la première de ces deux périodes ou auparavant, chacun des messages d'une catégorie intéressante répertoriés dans le message de repérage associé à la première période, elle peut ignorer au cours de la seconde période les diffusions de messages de cette catégorie indiqués dans le message de repérage associé comme ayant déjà été diffusés au cours de la période précédente. Comme, dans un certain nombre d'applications, le contenu des messages de service ne change que relativement rarement (typiquement, ils restent inchangés pendant des heures ou des jours tandis que la durée d'une période de repérage est de l'ordre de la minute), le gain sur l'autonomie des stations mobiles est très appréciable.

Revenant à l'exemple envisagé dans le tableau I, le contenu du message de repérage peut alors être celui indiqué dans le tableau III.

**Tableau III**

| En-tête (essentiellement le nombre de diffusions à intervenir au cours de la période de repérage, ici : 6) | | |
|---|---|---|
| 1 | 0 | c1 |
| 0 | 0 | c2 |
| 0 | 0 | c1 |
| 0 | 1 | c1 |
| 0 | 1 | c2 |
| 1 | 1 | c1 |

Après l'en-tête, les informations relatives aux diffusions de messages sont classées dans l'ordre dans lequel ces diffusions interviendront, encore qu'on pourrait adopter un autre ordre, déterminé d'une manière connue des stations mobiles à partir de l'ordre dans lequel interviendront les diffusions. Pour chaque diffusion, la valeur du premier bit indique si elle correspond à un message de service diffusé au cours de la période de repérage précédente (0) ou non (1), la valeur du second bit indique si la diffusion est une répétition d'un message de service déjà diffusé au cours de la période en question (1) ou non (0), et le reste du champ est occupé par la donnée de catégorie représentant le type de message.

Dans le tableau III, on a préféré maintenir l'indication (second bit) des répétitions des messages diffusés plusieurs fois au cours de la même période de repérage, cette indication gardant une utilité pour les cas où la station mobile manque la première réception, et ne faisant pas double emploi avec celle (premier bit) des messages qui ont été diffusés au cours de la période de repérage précédente. Quatre possibilités d'interprétation découlent donc des deux bits: les premières diffusions au cours de la période de repérage de messages qui n'ont pas été diffusés au cours de la période précédente (10), les premières diffusions au cours de la période de repérage de messages diffusés au cours de la période précédente (00), et les répétitions au cours de la période des deux cas de diffusion précédents (01 et 11). On pourrait néanmoins se contenter de trois possibilités en n'accordant pas de signification à la valeur du premier bit lorsque le second a la valeur 1.

Selon un second aspect de l'invention, applicable lorsque certains au moins des messages peuvent être diffusés plusieurs fois au cours de la période de repérage, on prévoit que le message de repérage inclue, le cas échéant, des données indiquant les diffusions de messages de service qui sont des répétitions de messages déjà diffusés au cours de ladite période, et en outre, pour chacune de ces diffusions, le numéro d'ordre d'une diffusion antérieure du message en question au cours de ladite période. Ainsi, les stations mobiles savent exactement quel message est répété et quand, et peuvent donc, en cas de problème de réception lors de la première diffusion, choisir exactement quel message réécouter.

On observera d'abord que ce second aspect peut être utilisé indépendamment de l'insertion des données indiquant si les messages de service à diffuser ont déjà été diffusés avant le message de repérage. Le tableau II peut alors être modifié comme indiqué dans le tableau IV. Les données de catégorie correspondant aux répétitions (1er bit du champ=1) sont remplacées par le numéro d'ordre des premières diffusions correspondantes (pour la (p+1)-ième diffusion du même message au cours de la période, on pourrait mettre le numéro d'ordre de l'une quelconque des p diffusions précédentes), ce qui est avantageux en termes de volume d'informations car les numéros d'ordre sont normalement codables sur moins de bits que les données de catégorie (typiquement 6 bits au lieu de 15 si on prévoit une capacité de l'ordre de 40 messages par période de repérage). Mais surtout, dans l'hypothèse où une station mobile intéressée par la catégorie c1 manquerait la réception du message émis en 1ère position, elle pourrait d'abstenir de recevoir le message diffusé en 4ème position, contrairement au cas où le message de repérage a le format illustré par le tableau II.

De préférence, le second aspect ci-dessus sera toutefois combiné à l'insertion des données indiquant si les messages à diffuser l'ont déjà été au cours de la période de repérage précédente. Toujours dans le cas du tableau I, le contenu du message de repérage peut alors être celui indiqué dans le tableau V.

Le format est le même que celui du tableau III, sauf que la donnée figurant en fin de champ pour chaque diffusion est constituée soit par la donnée de catégorie si la diffusion n'est pas une répétition d'un message déjà diffusé au cours de la période (second bit=0), soit par le numéro d'ordre d'une diffusion antérieure du message en question au cours de la période s'il s'agit d'une répétition (second bit=1). On notera qu'on peut changer la signification du premier bit des champs dont le second bit à la valeur 1 sans perdre d'information, puisque le numéro d'ordre qui suit permet d'aller chercher au début du champ correspondant à ce numéro le bit indiquant si le message en question a été diffusé au cours de la période de repérage précédente.

**Tableau IV**

| En-tête (essentiellement le nombre de diffusions à intervenir au cours de la période de repérage, ici : 6) | |
|---|---|
| 0 | c1 |
| 0 | c2 |
| 0 | c1 |
| 1 | 3 |
| 1 | 2 |
| 1 | 1 |

**Tableau V**

| En-tête (essentiellement le nombre de diffusions à intervenir au cours de la période de repérage, ici : 6) | | |
|---|---|---|
| 1 | 0 | c1 |
| 0 | 0 | c2 |
| 0 | 0 | c1 |
| 0 | 1 | 3 |
| 0 | 1 | 2 |
| 1 | 1 | 1 |

Si une station mobile intéressée par la catégorie c1, qui vient d'être mise sous tension ou qui vient d'entrer dans la cellule (et qui donc n'a pas encore reçu les messages M1 et M3), manque la réception du message diffusé en 1ère position et reçoit correctement celui diffusé en 3ème position, elle pourra, grâce aux informations reçues dans le message de repérage illustré par le tableau V, ignorer le message diffusé en 4ème position et ne recevoir que celui diffusé en 6ème position.

Lorsque chaque message de repérage est divisé en plusieurs blocs diffusés successivement sur le canal radio, et pouvant être reçus indépendamment les uns des autres par les stations mobiles, on prévoit avantageusement que le premier bloc du message de repérage inclue un en-tête comprenant une indication du nombre de diffusions de messages au cours de la période de repérage associée, et un champ d'indication des nouvelles diffusions comprenant une succession de bits indiquant chacun, pour l'une des diffusions dénombrées dans l'en-tête, si elle est la première diffusion, au cours de ladite période, d'un message de service qui n'a pas été diffusé au cours de la période de repérage précédente, et que le message de repérage inclue, après l'en-tête et le champ d'indication des nouvelles diffusions, les informations relatives aux premières diffusions, au cours de ladite période, de messages de service qui n'ont pas été diffusés au cours de la période de repérage précédente, et ensuite les informations relatives aux autres diffusions à intervenir au cours de ladite période de repérage.

Ainsi, on groupe au début du message de repérage les informations qui concernent les nouveaux messages de service à diffuser au cours de la période à venir. On entend ici par "nouveau" un message qui n'a pas été diffusé au cours de la période de repérage précédente, mais qui toutefois aurait pu l'être auparavant. Le plus souvent, ces nouvelles diffusions seront relativement peu nombreuses compte tenu de la faible fréquence de renouvellement des messages de service et de la longueur des périodes de repérage, de sorte que les informations s'y rapportant pourront tenir dans le premier bloc ou les quelques premiers blocs du message de repérage. Les stations mobiles qui savent avoir déjà reçu correctement tous les messages qui les intéressent et qui ont été diffusés au cours de la période précédente peuvent alors s'abstenir de recevoir les autres blocs du message de repérage. L'économie en réception porte maintenant sur le message de repérage lui-même et non plus seulement sur les messages de service.

Dans le cas considéré au tableau I, le message de repérage peut avoir le contenu indiqué dans le tableau VI, réparti sur un ou plusieurs blocs.

**Tableau VI**

| En-tête (essentiellement le nombre de diffusions à intervenir au cours de la période de repérage, ici : 6) | | |
|---|---|---|
| 100000 | | |
| c1 | | |
| 1 | 1 | 6 |
| 0 | c2 | |
| 0 | c1 | |
| 1 | 3 | |
| 1 | 2 | |

Après l'en-tête vient un champ d'indication des nouvelles diffusions dont les bits successifs indiquent, pour chaque diffusion recensée dans l'en-tête, si elle est la première diffusion, au cours de la période de repérage, d'un message de service qui n'a pas été diffusé au cours de la période précédente (1) ou non (0). Les champs suivants (un seul dans l'exemple considéré) fournissent les données de catégorie des messages faisant l'objet dès nouvelles diffusion indiquées dans le champ d'indication des nouvelles diffusions. Dans l'exemple considéré, on trouve ainsi la donnée de catégorie c1 du message M1 qui sera diffusé pour la première fois en 1ère position dans la période de repérage. Les champs suivants (un seul dans l'exemple) fournissent des informations relatives aux diffusions, prises dans l'ordre où elles interviendront, qui seront des répétitions des messages "nouvellement" diffusés au cours de la période de repérage. Ces informations comprennent un bit de valeur 1 qui indique que la diffusion est une répétition d'un message déjà diffusé, le numéro d'ordre de la première diffusion du message au cours de la période de repérage (ou de l'une quelconque des p premières diffusions s'il s'agit de la (p+1)-ième diffusion du même message au cours de la période)(1 dans l'exemple), et le numéro d'ordre de la répétition (6 dans l'exemple). Les autres champs du message de repérage concernent les diffusions autres que les diffusions des messages de service qui n'ont pas été diffusés au cours de la période de repérage précédente. Ces champs comprennent, pour chacune de ces diffusions concernant un message de service, prises dans l'ordre où elles interviendront (un autre ordre serait possible), un bit indiquant si le message a déjà été diffusé au cours de la période de repérage (1) ou non (0), et une donnée constituée soit par la donnée de catégorie du message si le premier bit vaut 0, soit par le numéro d'ordre d'une diffusion antérieure du message en question au cours de la période de repérage si le premier bit vaut 1.

Dans l'exemple du tableau VI, si les quatre premiers champs (jusqu'au chiffre 6) tiennent dans le premier bloc du message de repérage, une station mobile ayant reçu tous les messages l'intéressant qui ont été diffusés au cours de la période précédente peut ignorer les blocs suivants du message de repérage. Le nombre de réceptions utiles pour le message de repérage est alors réduit de trois quarts s'il y a quatre blocs par message.

En variante, on peut prévoir que les bits successifs du champ d'indication des nouvelles diffusions indiquent chacun, pour l'une des diffusions dénombrées dans l'en-tête, si elle correspond à un message de service déjà diffusé au cours de la période de repérage précédente, et que le message de repérage inclue, après l'en-tête et le champ d'indication des nouvelles diffusions, des informations relatives aux diffusions de messages de service qui n'ont pas été diffusés au cours de la période de repérage précédente, et ensuite des informations relatives aux diffusions autres que les diffusions des messages de service qui n'ont pas été diffusés au cours de la période de repérage précédente.

Le tableau VI est alors modifié comme indiqué dans le tableau VII.

**Tableau VII**

| En-tête (essentiellement le nombre de diffusions à intervenir au cours de la période de repérage, ici : 6) | |
|---|---|
| 100001 | |
| 0 | c1 |
| 1 | 1 |
| 0 | c2 |
| 0 | c1 |
| 1 | 3 |
| 1 | 2 |

Dans le champ d'indication des nouvelles diffusions, chaque bit vaut 1 pour la diffusion d'un message de service qui n'a pas été diffusé au cours de la période précédente et 0 dans le cas contraire. Les champs suivants (2 dans l'exemple considéré) concernent chacun une diffusion d'un message de service non diffusé au cours de la période précédente : le premier bit est à O pour les premières diffusions d'un message au cours de la période de repérage et à 1 pour les répétitions de messages déjà diffusés au cours de cette période. La donnée occupant le reste du champ est constituée par la donnée de catégorie du message lorsque le premier bit vaut 0 (première diffusion) ou par le numéro d'ordre d'une diffusion antérieure du message en question au cours de ladite période lorsque le premier bit vaut 1 (répétition). La station mobile est en mesure de retrouver le numéro d'ordre de chaque répétition sur la base de la position des bits valant 1 dans la séquence de bits du champ d'indication des nouvelles diffusions. Par rapport au format du tableau VI, celui du tableau VII a l'avantage de permettre de coder sur un octet seulement les répétitions des "nouveaux" messages lorsque, par exemple, les numéros d'ordre sont codables sur 6 bits et les données de catégorie sur 15 ou 16 bits.

L'invention a également pour objet une station de base pour réseau de radiocommunication cellulaire à accès multiple par répartition dans le temps, comprenant des moyens d'émission et de réception radio pour communiquer avec des stations mobiles sur plusieurs canaux radio, et des moyens pour mettre en forme une succession de messages diffusés à intervalles réguliers sur l'un des canaux radio, ces messages comprenant des messages de service et des messages de repérage construits conformément au procédé ci-dessus exposé.

Une station mobile de radiocommunication à accès multiple par répartition dans le temps pour la mise en oeuvre de l'invention comprend des moyens d'émission et de réception pour communiquer avec une station de base d'un réseau de radiocommunication cellulaire diffusant à intervalles réguliers sur un canal radio particulier des messages de service et des messages de repérage construits conformément au procédé ci-dessus exposé, des moyens de réception et d'interprétation desdits messages fonctionnant lorsque la station mobile n'est pas en communication, et des moyens d'analyse des messages de repérage pour interrompre le fonctionnement des moyens de réception et d'interprétation aux moments de chaque période de repérage, déterminés à partir du message de repérage associé, où la station de base rediffusera un message de service déjà diffusé au cours de la période de repérage précédente et que la station mobile a déjà reçu au cours de la période de repérage précédente ou auparavant.

D'autres particularités et avantages de la présente invention apparaîtront dans la description ci-après d'un exemple de réalisation préféré mais non limitatif, en référence aux dessins annexés, dans lesquels
- la figure 1 est un schéma synoptique partiel d'une station de base selon l'invention, montrant les parties concernées par l'invention ; et
- la figure 2 est un schéma synoptique partiel d'une station mobile selon l'invention, montrant les parties concernées par l'invention.

L'invention est décrite ci-après dans son application à la gestion de la diffusion de messages de service destinés aux utilisateurs du réseau cellulaire européen GSM, à laquelle il est habituellement fait référence par le sigle SMS-CB ("Short Message Service - Cell Broadcast"), et qui a fait l'objet des Spécifications Techniques publiées par l'ETSI (European Telecommunication Standard Institute) sous les références TS GSM 03.41 (draft pr ETS300 537) et TS GSM 04.12 (draft pr ETS300 560), auxquelles on pourra se reporter. Le GSM fait appel à la technique d'accès multiple par répartition dans le temps AMRT.

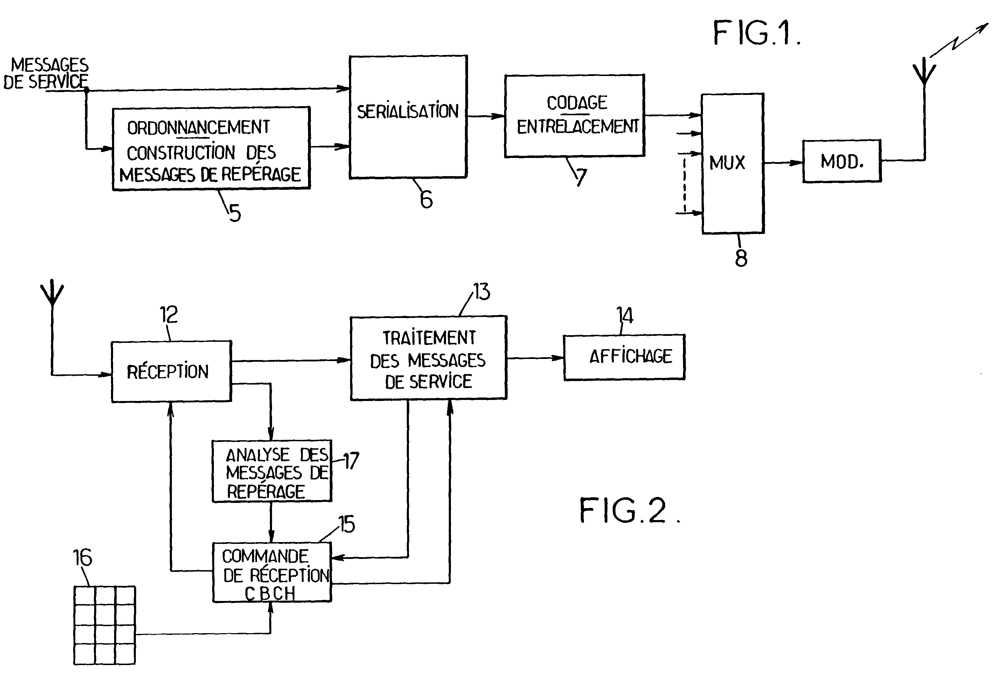

Chaque message de service a une longueur de 88 octets répartis en 4 blocs de 23 octets (incluant chacun un octet de niveau 2). Dans chaque station de base du réseau (figure 1), les messages de service sont fournis à une unité de gestion 5 qui détermine la séquence suivant laquelle il seront diffusés, et qui construit les messages de repérage à intercaler dans cette séquence. Les messages de service et de repérage sont mis en série par l'unité 6 pour former le flux de bits d'information à diffuser sur le canal de diffusion CBCH prévu à cet effet.

Comme il est prévu dans le cadre du GSM, le canal CBCH occupe la moitié de la capacité en liaison descendante d'un canal de signalisation dédié de type SDCCH ("Stand-alone dedicated control channel"). On pourra à cet égard se reporter à la Spécification Technique publiée par l'ETSI sous la référence TS GSM 05.02 (draft pr ETS300 574). Comme symbolisé par l'unité 7 sur la figure 1, chaque bloc de 8x23=184 bits d'un message est soumis à un codage correcteur d'erreurs et à un entrelacement, pour être transformé en un bloc de 456 bits constitué de 4 paquets entrelacés de 114 bits à diffuser chacun sur une tranche temporelle (0,577 ms) de la trame AMRT. Dans une multitrame AMRT du GSM, constituée de 51 trames de 8 tranches temporelles chacune, il y a quatre tranches temporelles réservées au canal SDCCH, situées dans quatre trames consécutives. La durée de diffusion d'un bloc de message est donc de 4 x 8 x 0,577 ms = 18,46 ms, et l'intervalle de temps constant séparant deux diffusions de message consécutives est, étant donné que seule la moitié de la capacité du canal SDCCH est utilisée, de 2 x 4 x 51 x 8 x 0,577 ms -1,88 s. L'assemblage des trames est assuré par le multiplexeur 8, dont la sortie est modulée à haute fréquence pour la diffusion radio dans la cellule desservie par la station de base. Dans la pratique, les unités 5 et 6 qui mettent en forme les messages à diffuser peuvent être situées sur le même site que le reste de la station de base, ou être situées sur le site du contrôleur de la station de base (BSC).

La figure 2 illustre l'équipement complémentaire dans une station mobile. La station mobile traite le signal radio capté pour en extraire les informations portées par les canaux qui la concernent. Lorsque la station mobile est activée sans être engagée dans une communication, l'unité de réception 12, de type classique, surveille un canal de contrôle BCCH diffusé par la station de base, pour se synchroniser relativement à la trame AMRT, et un canal de recherche (PCH) sur lequel la station de base peut la prévenir des appels qui lui sont destinés. La station de base représentée sur la figure 2, qui est adaptée à la réception des messages SMS-CB, surveille également le canal de diffusion CBCH. L'unité de réception 12 peut reconstituer bloc après bloc les bits d'information des messages de service : grâce à la synchronisation procurée par l'écoute du canal de contrôle BCCH, l'unité 12 extrait les échantillons des tranches temporelles allouées au canal CBCH, et effectue les opérations de désentrelacement et de décodage duales des opérations de codage et d'entrelacement effectués par l'unité 7 de la station de base. L'unité 12 délivre les blocs de 88 octets des messages de service à une unité de traitement 13 qui interprète ces messages conformément à un protocole préétabli pour les afficher sur un écran 14 de la station mobile. Les messages de service peuvent également être mémorisés temporairement. Les blocs sont diffusés avec entre eux un intervalle de temps suffisant pour qu'ils puissent être reçus indépendamment les uns des autres par les stations mobiles.

Une unité de commande 15 est prévue dans la station mobile pour commander le fonctionnement de l'unité de réception 12 et de l'unité de traitement 13 aux instants appropriés. En particulier, les unités 12 et 13 sont inhibées dès qu'une communication mettant en jeu la station mobile s'établit. L'utilisateur peut programmer l'unité de commande 15 par l'intermédiaire du clavier 16 pour ne recevoir que certaines catégories de messages de service. Lors de 1a diffusions de messages n'appartenant pas aux catégories sélectionnées, l'unité de commande 15 inhibe les unités 12 et 13 afin d'économiser les ressources énergétiques de la station mobile. Le message de repérage relatif à la période courante peut n'avoir pas été reçu par la station mobile, à cause d'une erreur de transmission du message de repérage, ou parce que la station mobile vient tout juste d'être activée ou d'entrer dans la cellule. L'unité de commande 15 examine alors les données d'identification qui sont contenues dans le premier bloc du message de service courant, et qui lui sont fournies par l'unité de traitement 13. Si ces données révèlent que le message n'appartient pas aux catégories sélectionnées, l'unité de commande 15 décide de ne pas recevoir les trois autres blocs du message.

La station mobile comporte également une unité 17 d'analyse des messages de repérage pour indiquer à l'unité de commande 15 les instants où il y a lieu de faire fonctionner les unités 12 ou 13 en fonction du contenu de chaque message de repérage. Les messages de repérage peuvent notamment être identifiés sur la base du contenu du 23ème octet, de niveau 2, de chaque bloc. Une fois qu'elle a reçu un message de repérage, la station mobile peut ignorer les diffusions de messages de service pour lesquelles le message de repérage fournit des données de catégorie autres que celles sélection-nées, ainsi que les répétitions, indiquées dans le message de repérage, de messages de service qu'elle a déjà correctement reçus au cours de la période de repérage associée. Après réception du message de repérage associé à la période suivante, la station mobile peut en outre ignorer les messages de service diffusés au cours de cette période suivante, et indiqués dans le message de repérage comme ayant été diffusés au cours de la période précédente, pourvu que ces messages de service aient été correctement reçus au cours de la période précédente ou auparavant.

Le message de repérage construit par l'unité de gestion 5 de la station de base a, dans l'exemple considéré, la structure octet par octet illustrée dans le tableau VIII, qui correspond au format précédemment présenté dans le tableau VI (le format du tableau III, IV, V ou VII serait également utilisable).

Les deux premiers octets (en-tête) indiquent le début de la période de repérage et le nombre de diffusions qui interviendront au cours de la période (40 au maximum).

Le champ d'indication des nouvelles diffusions se compose de 40 bits. Le i-ième bit de ce champ a la valeur 1 si la diffusion à intervenir en i-ième position au cours de la période de repérage est la première diffusion, au cours de cette période, d'un message de service qui n'a pas été diffusé sur le canal CBCH au cours de la période précédente, et la valeur 0 dans le cas contraire. Si n diffusions sont dénombrées dans l'en-tête, les 40-n derniers bits du champ d'indication des nouvelles diffusions sont en réserve.

**Tableau VIII**

| **octet N°** | **contenu** |
|---|---|
| 1 et 2 | En-tête |
| 3 à 7 | Champ d'indication des nouvelles diffusions |
| 8 à 8+2k-1 | Catégories des k messages faisant l'objet des k nouvelles diffusions |
| 8+2k à 8+2(k+r)-1 | Informations sur les r répétitions de messages nouvellement diffusés au cours de la période de repérage |
| 8+2(k+r) à 87 | Informations sur les autres diffusions (notamment messages diffusés au cours de la période de repérage précédente) |
| 88 | Réserve |

Les champs suivants (octets 8 à 8+2k-1) se composent chacun de deux octets pour une nouvelle diffusion à intervenir, permettant de loger chacun des 16 bits de la donnée de catégorie du message. Ces champs de deux octets sont rangés dans l'ordre dans lequel les diffusions concernées interviendront au cours de la période de repérage, les stations mobiles pouvant reconstituer les positions correspondantes sur la base des bits du champ d'indication des nouvelles diffusions.

Les champs suivants (octets 8+2k à 8+2(k+r)-1) se composent également de deux octets chacun, et concernent, dans l'ordre dans lequel elles interviendront, les répétitions des messages de service nouvellement diffusés au cours de la période de repérage. Chacun de ces champs comporte d'abord deux bits de valeur 10, dont le premier indique que la diffusion concernée sera une répétition, puis le numéro d'ordre (6 bits) de la première diffusion du message en question au cours de la période, puis le numéro d'ordre (6 bits) de la répétition, les deux derniers bits du champ étant en réserve.

Les champs suivants (octets 7+2(k+r) à 87 ; en fait, seuls les octets 8+2(k+r) à 8+2n-1 portent de l'information utile) se composent également de deux octets chacun, et concernent, dans l'ordre dans lequel elles interviendront, les diffusions autres que les diffusions des messages de service qui n'ont pas été diffusés au cours de la période de repérage précédente. Un champ correspondant à une première diffusion d'un message de service au cours de la période a son premier bit à 0, et les 15 bits suivants représentent la donnée de catégorie du message. Le 16ème bit de la donnée de catégorie complète, spécifiée pour le GSM, est tronqué, ce qui pourrait entraîner quelques cas d'ambiguïté, en fait très peu probables étant donné que 15 bits codent déjà 32 768 possibilités. Si cela se produit, la station mobile sera amenée à recevoir le premier bloc d'un message qui éventuellement ne l'intéresse pas. Ceci ne peut concerner que des cas où le message en question n'aurait pas été reçu au cours de la période précédente. Cet inconvénient est donc minime. Un champ correspondant à une diffusion d'un message de service déjà diffusé après le message de repérage et au cours de la période précédente a son premier bit à 1 et son second bit à 0 ou à 1 ; les 6 derniers bits de son premier octet codent le numéro d'ordre de la première diffusion du message intervenue au cours de la période de repérage, et son second octet peut fournir un paramètre supplémentaire d'identification du message, éventuellement sélectionnable suivant la valeur du second bit du premier octet.

Avec cette structure du message de repérage, une station mobile qui sait qu'elle a précédemment reçu tous les messages de service des catégories sélectionnées peut se contenter de ne recevoir que le premier bloc du message de repérage dès lors que 8+2(k+r)-1 ≤ 22, soit k+r ≤ 7 (cas le plus fréquent). Si 7 < k+r ≤ 18, cette station mobile n'écoute que les deux premiers blocs du message de repérage, et si 18 < k+r ≤ 29 les trois premiers blocs.

Le code correcteur d'erreur qui a été introduit par l'unité 7 de la station de base et qui est décodé par la station mobile permet de déterminer quand celle-ci manque la réception d'un bloc d'un message de service qui l'intéresse. Une erreur de réception peut également être détectée quand l'unité de traitement 13 ne parvient pas à interpréter un bloc. En cas d'erreur, si le message de repérage a indiqué une ou plusieurs répétitions du message en question, l'unité de commande 15 peut faire fonctionner les unités 12 et 13 seulement pour recevoir la répétition du bloc manqué.

Si les erreurs de transmission sont considérées comme suffisamment peu probables, la station mobile peut également adopter la stratégie consistant à recevoir un seul bloc du message dès que k ≤ 7, deux blocs lorsque 7 < k ≤ 18 et trois blocs lorsque 18 < k ≤ 29, et à ignorer les répétitions dont elle aurait pu ne pas recevoir les indications du fait de la troncature du message de repérage.

La structure des messages de repérage présentée au tableau VIII conduit à des procédures de codage et de décodage relativement simples dans la mesure où un champ de longueur constante (2 octets) est attribué à chaque diffusion à intervenir. On observera toutefois que, pour les diffusions qui sont des répétitions de messages déjà diffusés au cours de la période de repérage considérée et de la période précédente, on pourrait se contenter d'un seul octet comportant un bit à 1 indiquant qu'il s'agit d'une répétition, six bits codant le numéro d'ordre d'une diffusion antérieure du message en question au cours de la période et un bit de réserve. Cette façon de procéder permet de répertorier davantage de diffusions par message de repérage. Pour gagner du volume d'information, on peut également envisager des en-têtes sur un octet seulement.

On pourra prévoir qu'un message de repérage soit diffusable plusieurs fois au cours de la période de repérage associée, avec éventuellement quelques modifications. Dans le cas du tableau VIII, les répétitions du message de repérage peuvent être indiquées à leur tour par un code approprié dans l'un des champs compris entre les octets 8+2(k+r) et 87. Une possibilité est de réserver le cas où les deux premiers bits d'un tel champ valent 1 pour indiquer à une station mobile fonctionnant en réception discontinue du canal CBCH et recevant le message de repérage qu'elle peut s'abstenir de recevoir la diffusion faisant l'objet de ce champ d'information. Ces champs commençant par 11 peuvent correspondre à des diffusions destinées à des stations mobiles ne fonctionnant pas en réception discontinue du canal CBCH ou aux répétitions du message de repérage, ou encore à des messages vierges. Ainsi, les stations mobiles qui écoutent la répétition d'un message de repérage sont celles qui sont intéressées par le message de repérage et qui ne l'ont pas correctement reçu lors d'une précédente diffusion.

## Revendications

1. Procédé de transmission de messages depuis une infrastructure d'un réseau de radiocommunication à accès multiple par répartition dans le temps vers des stations mobiles, lesdits messages étant diffusés successivement et à intervalles réguliers vers les stations mobiles sur un canal radio particulier (CBCH), et comprenant des messages de service et des messages de repérage respectivement associés à des périodes de repérage successives, chaque message de repérage comportant des informations sur la répartition des messages de service qui vont être diffusés au cours de la période de repérage associée, **caractérisé en ce que**, pour chaque message de service qui va être diffusé au cours d'une période de repérage, le message de repérage associé inclut une donnée indiquant si ce message de service a été diffusé au cours de la période de repérage précédente.

2. Procédé selon la revendication 1, **caractérisé en ce que**, certains au moins des messages de service pouvant être diffusés plusieurs fois au cours d'une même période de repérage, le message de repérage associé à cette période inclut des données indiquant, le cas échéant, les diffusions de messages de service qui sont des répétitions de messages de service déjà diffusés au cours de ladite période.

3. Procédé selon la revendication 2, **caractérisé en ce que** le message de repérage inclut un en-tête comprenant une indication du nombre de diffusions de messages au cours de la période de repérage associée puis, pour chacune de ces diffusions concernant un message de service, un bit dont la valeur indique si le message de service a été diffusé au cours de la période de repérage précédente, un bit dont la valeur indique si la diffusion est une répétition d'un message de service déjà diffusé au cours de ladite période, et une donnée de catégorie représentant le type de message de service, l'ordre desdits bits et desdites données de catégorie dans le message de repérage étant déterminé à partir de l'ordre dans lequel les diffusions interviendront au cours de ladite période de repérage.

4. Procédé selon la revendication 2, **caractérisé en ce que**, lorsque le message de repérage inclut une donnée indiquant qu'une diffusion de message de service est une répétition d'un message de service déjà diffusé au cours de la période de repérage associée, il inclut en outre, pour cette diffusion constituant une répétition, le numéro d'ordre d'une diffusion antérieure du message en question au cours de ladite période.

5. Procédé selon la revendication 4, **caractérisé en ce que** le message de repérage inclut un en-tête comprenant une indication du nombre de diffusions de messages au cours de la période de repérage associée puis, pour chacune de ces diffusions concernant un message de service, un bit dont la valeur indique si le message de service a été diffusé au cours de la période de repérage précédente, un bit dont la valeur indique si la diffusion est une répétition d'un message de service déjà diffusé au cours de ladite période, et une donnée constituée soit par une donnée de catégorie représentant le type de message de service si la diffusion n'est pas une répétition d'un message de service déjà diffusé au cours de ladite période, soit par le numéro d'ordre d'une diffusion antérieure du message en question au cours de ladite période si la diffusion est une répétition d'un message de service déjà diffusé au cours de ladite période, l'ordre desdits bits, desdites données de catégorie et desdits numéros d'ordre dans le message de repérage étant déterminé à partir de l'ordre dans lequel les diffusions interviendront au cours de ladite période de repérage.

6. Procédé selon la revendication 1, 2 ou 4, **caractérisé en ce que** chaque message de repérage est divisé en plusieurs blocs diffusés successivement sur le canal radio et pouvant être reçus indépendamment les uns des autres par les stations mobiles, en ce que le premier bloc du message de repérage inclut un en-tête comprenant une indication du nombre de diffusions de messages au cours de la période de repérage associée, et un champ d'indication des nouvelles diffusions comprenant une succession de bits indiquant chacun, pour l'une des diffusions dénombrées dans l'en-tête, si elle est la première diffusion, au cours de ladite période, d'un message de service qui n'a pas été diffusé au cours de la période de repérage précédente, et en ce que le message de repérage inclut, après l'en-tête et le champ d'indication des nouvelles diffusions, des informations relatives aux premières diffusions, au cours de ladite période, de messages de service qui n'ont pas été diffusés au cours de la période de repérage précédente, et ensuite des informations relatives aux autres diffusions à intervenir au cours de ladite période de repérage.

7. Procédé selon la revendication 6, **caractérisé en ce que** lesdites informations relatives aux premières diffusions, au cours de ladite période, de messages de service qui n'ont pas été diffusés au cours de la période de repérage précédente comprennent des données de catégorie représentant les types de messages de service faisant l'objet de ces diffusions.

8. Procédé selon la revendication 6 ou 7, **caractérisé en ce que** le message de repérage inclut, après lesdites informations relatives aux premières diffusions, au cours de ladite période, de messages de service qui n'ont pas été diffusés au cours de la période de repérage précédente, des informations relatives aux diffusions qui sont des répétitions de messages de service déjà diffusés au cours de ladite période de repérage et qui n'ont pas été diffusés au cours de la période de repérage précédente, et ensuite des informations relatives aux diffusions autres que les diffusions des messages de service qui n'ont pas été diffusés au cours de la période de repérage précédente.

9. Procédé selon la revendication 8, **caractérisé en ce que** lesdites informations relatives aux diffusions qui sont des répétitions de messages de service déjà diffusés au cours de ladite période de repérage et qui n'ont pas été diffusés au cours de la période de repérage précédente comprennent, pour chacune-de ces diffusions, au moins un bit dont la valeur indique qu'elle est la répétition d'un message de service déjà diffusé au cours de ladite période, le numéro d'ordre d'une diffusion antérieure du message en question au cours de ladite période, et le numéro d'ordre de ladite répétition.

10. Procédé selon la revendication 1, 2 ou 4, **caractérisé en ce que** chaque message de repérage est divisé en plusieurs blocs diffusés successivement sur le canal radio et pouvant être reçus indépendamment les uns des autres par les stations mobiles, en ce que le premier bloc du message de repérage inclut un en-tête comprenant une indication du nombre de diffusions de messages au cours de la période de repérage associée, et un champ d'indication des nouvelles diffusions comprenant une succession de bits indiquant chacun, pour l'une des diffusions dénombrées dans l'en-tête, si elle correspond à un message de service déjà diffusé au cours de la période de repérage précédente, et en ce que le message de repérage inclut, après l'en-tête et le champ d'indication des nouvelles diffusions, des informations relatives aux diffusions de messages de service qui n'ont pas été diffusés au cours de la période de repérage précédente, et ensuite des informations relatives aux diffusions autres que les diffusions des messages de service qui n'ont pas été diffusés au cours de la période de repérage précédente.

11. Procédé selon la revendication 10, **caractérisé en ce que** lesdites informations relatives aux diffusions de messages de service qui n'ont pas été diffusés au cours de la période de repérage précédente comprennent, pour chacune de ces diffusions prises dans un ordre déterminé à partir de l'ordre dans lequel elles interviendront au cours de ladite période de repérage, un bit dont la valeur indique si elle est une répétition d'un message de service déjà diffusé au cours de ladite période, et une donnée constituée soit par une donnée de catégorie représentant le type de message de service si la diffusion n'est pas une répétition d'un message de service déjà diffusé au cours de ladite période, soit par le numéro d'ordre d'une diffusion antérieure du message en question au cours de ladite période si la diffusion est une répétition d'un message de service déjà diffusé au cours de ladite période.

12. Procédé selon l'une quelconque des revendications 8 à 11, **caractérisé en ce que** lesdites informations relatives aux diffusions autres que les diffusions des messages de service qui n'ont pas été diffusés au cours de la période de repérage précédente comprennent, pour chacune de ces diffusions concernant un message de service, prises dans un ordre déterminé à partir de l'ordre dans lequel elles interviendront au cours de ladite période de repérage, un bit dont la valeur indique si elle est une répétition d'un message de service déjà diffusé au cours de ladite période, et une donnée constituée soit par une donnée de catégorie représentant le type de message de service si la diffusion n'est pas une répétition d'un message de service déjà diffusé au cours de ladite période, soit par le numéro d'ordre d'une diffusion antérieure du message en question au cours de ladite période si la diffusion est une répétition d'un message de service déjà diffusé au cours de ladite période.

13. Procédé de transmission de messages depuis une infrastructure d'un réseau de radiocommunication à accès multiple par répartition dans le temps vers des stations mobiles, lesdits messages étant diffusés successivement et à intervalles réguliers vers les stations mobiles sur un canal radio particulier (CBCH), et comprenant des messages de service et des messages de repérage respectivement associés à des périodes de repérage successives, chaque message de repérage comportant des informations sur la répartition des messages de service qui vont être diffusés au cours de la période de repérage associée, **caractérisé en ce que**, certains au moins des messages de service pouvant être diffusés plusieurs fois au cours d'une même période de repérage, le message de repérage associé à cette période inclut des données indiquant, le cas échéant, les diffusions de messages de service qui sont des répétitions de messages de service déjà diffusés au cours de ladite période, et en ce que, lorsque le message de repérage inclut une donnée indiquant qu'une diffusion de message de service est une répétition d'un message de service déjà diffusé au cours de la période de repérage associée, il inclut en outre, pour cette diffusion constituant une répétition, le numéro d'ordre d'une diffusion antérieure du message en question au cours de ladite période.

14. Station de base pour réseau de radiocommunication cellulaire à accès multiple par répartition dans le temps, comprenant des moyens d'émission et de réception radio pour communiquer avec des stations mobiles sur plusieurs canaux radio, et des moyens (5,6) pour mettre en forme une succession de messages diffusés à intervalles réguliers sur l'un des canaux radio (CBCH), ces messages comprenant des messages de service et des messages de repérage, lesdits moyens de mise en forme construisant les messages de repérage de façon qu'ils aient une structure telle qu'énoncée dans l'une quelconque des revendications 1 à 13.

15. Station mobile de radiocommunication à accès multiple par répartition dans le temps, comprenant des moyens d'émission et de réception pour communiquer avec une station de base d'un réseau de radiocommunication cellulaire diffusant à intervalles réguliers sur un canal radio particulier (CBCH) des messages de service et des messages de repérage construits conformément à l'une quelconque des revendications 1 à 12, des moyens (12,13) de réception et d'interprétation desdits messages fonctionnant lorsque la station mobile n'est pas en communication, et des moyens (17) d'analyse des messages de repérage pour interrompre le fonctionnement des moyens de réception et d'interprétation aux moments de chaque période de repérage, déterminés à partir du message de repérage associé, où la station de base rediffusera un message de service déjà diffusé au cours de la période de repérage précédente et que la station mobile a déjà reçu au cours de la période de repérage précédente ou auparavant.

## Claims

1. Process for transmitting messages from an infrastructure of a time division multiple access radio communication network to mobile stations, said messages being broadcast successively and at regular intervals to the mobile stations on a particular radio channel (CBCH), and comprising service messages and schedule messages respectively associated with successive schedule periods, each schedule message including information about the distribution of the service messages which will be broadcast during the associated schedule period, **characterized in that**, for each service message which will be broadcast during a schedule period, the associated schedule message includes a cue indicating whether this service message has been broadcast during the preceding schedule period.

2. Process according to claim 1, **characterized in that**, certain at least of the service messages possibly being broadcast several times during the same schedule period, the schedule message associated with this period includes cues indicating, as the case may be, the broadcasts of service messages which are repetitions of the service messages already broadcast during said period.

3. Process according to claim 2, **characterized in that** the schedule message includes a header comprising an indication of the number of broadcasts of messages during the associated schedule period followed by, for each of these broadcasts relating to a service message, a bit whose value indicates whether the service message has been broadcast during the preceding schedule period, a bit whose value indicates whether the broadcast is a repetition of a service message already broadcast during said period, and a category cue representing the type of service message, the sequence of said bits and of said category cues in the schedule message being determined from the sequence in which the broadcasts will occur during said schedule period.

4. Process according to claim 2, **characterized in that**, when the schedule message includes a cue indicating that a service message broadcast is a repetition of a service message already broadcast during the associated schedule period, it furthermore includes, in respect of this broadcast constituting a repetition, the sequence number of an earlier broadcast of the message in question during said period.

5. Process according to claim 4, characterized in chat the schedule message includes a header comprising an indication of the number of broadcasts of messages during the associated schedule period followed by, for each of these broadcasts relating to a service message, a bit whose value indicates whether the service message has been broadcast during the preceding schedule period, a bit whose value indicates whether the broadcast is a repetition of a service message already broadcast during said period, and a cue consisting either of a category cue representing the type of service message if the broadcast is not a repetition of a service message already broadcast during said period, or of the sequence number of an earlier broadcast of the message in question during said period if the broadcast is a repetition of a service message already broadcast during said period, the sequence of said bits, of said category cues and of said sequence numbers in the schedule message being determined from the sequence in which the broadcasts will occur during said schedule period.

6. Process according to claim 1, 2 or 4, **characterized in that** each schedule message is divided into several blocks broadcast successively on the radio channel and being receivable independently of one another by the mobile stations, in that the first block of the schedule message includes a header comprising an indication of the number of broadcasts of messages during the associated schedule period, and a new broadcast-indicating field comprising a succession of bits each indicating, in respect of one of the broadcasts enumerated in the header, whether it is the first broadcast, during said period, of a service message which has not been broadcast during the preceding schedule period, and in that the schedule message includes, after the header and the new broadcast-indicating field, information relating to the first broadcasts, during said period, of service messages which have not been broadcast during the preceding schedule period, and then information relating to the other broadcasts to occur during said schedule period.

7. Process according to claim 6, **characterized in that** said information relating to the first broadcasts, during said period, of service messages which have not been broadcast during the preceding schedule period comprise category cues representing the types of service messages forming the subject of these broadcasts.

8. Process according to claim 6 or 7, **characterized in that** the schedule message includes, after said information relating to the first broadcasts, during said period, of service messages which have not been broadcast during the preceding schedule period, information relating to the broadcasts which are repetitions of service messages already broadcast during said schedule period and which have not been broadcast during the preceding schedule period, and then information relating to the broadcasts other than the broadcasts of the service messages which have not been broadcast during the preceding schedule period.

9. Process according to claim 8, **characterized in that** said information relating to the broadcasts which are repetitions of service messages already broadcast during said schedule period and which have not been broadcast during the preceding schedule period comprise, in respect of each of these broadcasts, at least one bit whose value indicates that it is the repetition of a service message already broadcast during said period, the sequence number of an earlier broadcast of the message in question during said period, and the sequence number of said repetition.

10. Process according to claim 1, 2 or 4, **characterized in that** each schedule message is divided into several blocks broadcast successively on the radio channel and being receivable independently of one another by the mobile stations, in that the first block of the schedule message includes a header comprising an indication of the number of broadcasts of messages during the associated schedule period, and a new broadcast-indicating field comprising a succession of bits each indicating, in respect of one of the broadcasts enumerated in the header, whether it corresponds to a service message already broadcast during the preceding schedule period, and in that the schedule message includes, after the header and the new broadcas-indicating field, information relating to the broadcasts of service messages which have not been broadcast during the preceding schedule period, and then information relating to the broadcasts other than the broadcasts of the service messages which have not been broadcast during the preceding schedule period.

11. Process according to claim 10, **characterized in that** said information relating to the broadcasts of service messages which have not been broadcast during the preceding schedule period comprise, in respect of each of these broadcasts ordered in a sequence determined from the sequence in which they will occur during said schedule period, a bit whose value indicates whether it is a repetition of a service message already broadcast during said period, and a cue consisting either of a category cue representing the type of service message if the broadcast is not a repetition of a service message already broadcast during said period, or of the sequence number of an earlier broadcast of the message in question during said period if the broadcast is a repetition of a service message already broadcast during said period.

12. Process according to any one of claims 8 to 11, **characterized in that** said information relating to the broadcasts other than the broadcasts of the service messages which have not been broadcast during the preceding schedule period comprise, for each of these broadcasts relating to a service message, ordered in a sequence determined from the sequence in which they will occur during said schedule period, a bit whose value indicates whether it is a repetition of a service message already broadcast during said period, and a cue consisting either of a category cue representing the type of service message if the broadcast is not a repetition of a service message already broadcast during said period, or of the sequence number of an earlier broadcast of the message in question during said period if the broadcast is a repetition of a service message already broadcast during said period.

13. Process for transmitting messages from an infrastructure of a time division multiple access radio communication network to mobile stations, said messages being broadcast successively and at regular intervals to the mobile stations on a particular radio channel (CBCH), and comprising service messages and schedule messages respectively associated with successive schedule periods, each schedule message including information about the distribution of the service messages which will be broadcast during the associated schedule period, **characterized in that**, certain at least of the service messages possibly being broadcast several times during the same schedule period, the schedule message associated with this period includes cues indicating, as the case may be, the broadcasts of service messages which are repetitions of the service messages already broadcast during said period, and in that, when the schedule message includes a cue indicating that a broadcast of a service message is a repetition of a service message already broadcast during the associated schedule period, it furthermore includes, in respect of this broadcast constituting a repetition, the sequence number of an earlier broadcast of the message in question during said period.

14. Base station for a time division multiple access cellular radio communication network, comprising radio transmission and reception means for communicating with mobile stations on several radio channels, and means (5, 6) for forming a succession of messages broadcast at regular intervals on one of the radio channels (CBCH), these messages comprising service messages and schedule messages, whereby said forming means construct the schedule messages so that they have a structure as set out in any one of claims 1 to 13.

15. Time division multiple access mobile radio communication station comprising transmission and reception means for communicating with a base station of a cellular radio communication network broadcasting at regular intervals on a particular radio channel (CBCH) service messages and schedule messages constructed in accordance with any one of claims 1 to 12, means (12, 13) for receiving and interpreting said messages operating when the mobile station is not communicating, and means (17) for analyzing schedule messages in order to interrupt the operation of the receiving and interpreting means at the moments in each schedule period, which are determined on the basis of the associated schedule message, at which the base station will rebroadcast a service message already broadcast during the preceding schedule period and which the mobile station has already received during the preceding schedule period or previously.

## Patentansprüche

1. Verfahren zur Nachrichtenübertragung aus einer Infrastruktur eines Funknetzes mit Vielfachzugriff im Zeitmultiplex zu Mobilstationen, wobei die Nachrichten nacheinander in regelmäßigen Zeitabständen zu den Mobilstationen auf einem bestimmten Funkkanal (CBCH) übertragen werden, und mit Dienstnachrichten und Kennzeichnungsnachrichten, die jeweils mit den aufeinanderfolgenden Kennzeichnungsperioden verbunden sind, wobei jede Kennzeichnungsnachricht Informationen über die Aufteilung der Dienstnachrichten trägt, die im Verlauf der zugehörigen Kennzeichnungsperiode übertragen werden, **dadurch gekennzeichnet**, daß für jede Dienstnachricht, die im Verlauf einer Kennzeichnungsperiode übertragen werden soll, die zugehörige Kennzeichnungsnachricht eine Information einschließt, die anzeigt, ob diese Dienstnachricht im Verlauf der vorhergehenden Kennzeichnungsperiode übertragen worden ist.

2. Verfahren nach Anspruch 1, **dadurch gekennzeichnet**, daß, da mindestens gewisse der Dienstnachrichten mehrere Male im Verlauf derselben Kennzeichnungsperiode übertragen worden sein können, die mit dieser Periode verbundene Kennzeichnungsnachricht Daten einschließt, die gegebenenfalls die Übertragungen von Dienstnachrichten anzeigen, die Wiederholungen von Dienstnachrichten sind, die schon im Verlauf der Periode übertragen worden sind.

3. Verfahren nach Anspruch 2, **dadurch gekennzeichnet**, daß die Kennzeichnungsnachricht einen Kopfteil mit einer Anzeige der Anzahl von Nachrichtenübertragungen im Verlauf der zugehörigen Kennzeichnungsperiode einschließt und für jede dieser eine Dienstnachricht betreffenden Übertragungen ein Bit, dessen Wert anzeigt, ob die Dienstnachricht im Verlauf der vorhergehenden Kennzeichnungsperiode übertragen worden ist, ein Bit, dessen Wert anzeigt, ob die Übertragung eine Wiederholung einer schon im Verlauf der Periode übertragenen Dienstnachricht ist, und eine Information der die Art von Dienstnachricht darstellenden Kategorie, wobei die Reihenfolge der Bits und der Kategoriedaten in der Kennzeichnungsnachricht aus der Reihenfolge bestimmt wird, in der die Übertragungen im Verlauf der Kennzeichnungsperiode eintreten.

4. Verfahren nach Anspruch 2, **dadurch gekennzeichnet**, daß, wenn die Kennzeichnungsnachricht eine Information einschließt, die anzeigt, daß eine Dienstnachrichtenübertragung eine Wiederholung einer schon im Verlauf der zugehörigen Kennzeichnungsperiode übertragenen Dienstnachricht ist, sie außerdem für diese eine Wiederholung darstellende Übertragung die Ordnungsnummer einer vorherigen Übertragung der in Frage stehenden Nachricht im Verlauf der Periode einschließt.

5. Verfahren nach Anspruch 4, **dadurch gekennzeichnet**, daß die Kennzeichnungsnachricht einen Kopfteil mit einer Anzeige der Anzahl von Nachrichtenübertragungen im Verlauf der zugehörigen Kennzeichnungsperiode einschließt, und für jede dieser eine Dienstnachricht betreffenden Übertragungen ein Bit, dessen Wert anzeigt, ob die Dienstnachricht im Verlauf der vorhergehenden Kennzeichnungsperiode übertragen worden ist, ein Bit, dessen Wert anzeigt, ob die Übertragung einer Wiederholung einer schon im Verlauf der Periode übertragenen Dienstnachricht ist, und eine Information, die entweder aus einer Kategorieinformation besteht, die den Dienstnachrichtentyp darstellt, wenn die Übertragung keine Wiederholung einer schon im Verlauf der Periode übertragenen Dienstnachricht ist, oder aus der Ordnungsnummer einer vorherigen Übertragung der in Frage stehenden Nachricht im Verlauf der Periode, wenn die Übertragung eine Wiederholung einer schon im Verlauf der Periode übertragenen Dienstnachricht ist, wobei die Reihenfolge der Bit, der Kategoriedaten und der Ordnungsnummern in der Kennzeichnungsnachricht aus der Reihenfolge bestimmt wird, in der die Übertragungen im Verlauf der Kennzeichnungsperiode eintreten.

6. Verfahren nach Anspruch 1, 2 oder 4, **dadurch gekennzeichnet**, daß jede Kennzeichnungsnachricht in mehrere Blöcke eingeteilt wird, die nacheinander auf dem Funkkanal übertragen werden und unabhängig voneinander von den Mobilstationen empfangen werden können, daß der erste Block der Kennzeichnungsnachricht einen Kopfteil mit einer Anzeige der Anzahl von Nachrichtenübertragungen im Verlauf der zugehörigen Kennzeichnungsperiode einschließt, und ein Anzeigefeld von neuen Übertragungen mit einer Folge von Bit, die jeweils für eine der im Kopfteil aufgezählten Übertragungen anzeigen, ob sie im Verlauf der Periode die erste Übertragung einer Dienstnachricht ist, die nicht im Verlauf der vorhergehenden Kennzeichnungsperiode übertragen worden ist, und daß die Kennzeichnungsnachricht nach dem Kopfteil und dem Anzeigefeld für neue Übertragungen Informationen in bezug auf erste Übertragungen, im Verlauf der Periode, von Dienstnachrichten, die nicht im Verlauf der vorhergehenden Kennzeichnungsperiode übertragen worden sind, und dann Informationen in bezug auf andere Übertragungen, die im Verlauf der Kennzeichnungsperiode noch eintreten werden, einschließt.

7. Verfahren nach Anspruch 6, **dadurch gekennzeichnet**, daß die Informationen in bezug auf erste Übertragungen, im Verlauf der Periode, von Dienstnachrichten, die nicht im Verlauf der vorhergehenden Kennzeichnungsperiode übertragen worden sind, Kategoriedaten umfassen, die die Arten von Dienstnachrichten darstellen, die Gegenstand dieser Übertragungen sind.

8. Verfahren nach Anspruch 6 oder 7, **dadurch gekennzeichnet**, daß die Kennzeichnungsnachricht nach den Informationen in bezug auf die ersten Übertragungen, im Verlauf der Periode, von Dienstnachrichten, die nicht im Verlauf der vorhergehenden Kennzeichnungsperiode übertragen worden sind, Informationen in bezug auf Übertragungen einschließt, die Wiederholungen von schon im Verlauf der Kennzeichnungsperiode übertragenen Dienstnachrichten sind und die nicht im Verlauf der vorhergehenden Kennzeichnungsperiode übertragen worden sind, und danach Informationen in bezug auf andere Übertragungen als die Übertragungen von Dienstnachrichten, die nicht im Verlauf der vorhergehenden Kennzeichnungsperiode übertragen worden sind.

9. Verfahren nach Anspruch 8, **dadurch gekennzeichnet**, daß die Informationen in bezug auf Übertragungen, die Wiederholungen von schon im Verlauf der Kennzeichnungsperiode übertragenen Dienstnachrichten sind und die nicht im Verlauf der vorhergehenden Kennzeichnungsperiode übertragen worden sind, für jede dieser Übertragungen mindestens ein Bit umfassen, dessen Wert anzeigt, daß sie die Wiederholung einer schon im Verlauf der Periode übertragenen Dienstnachricht ist, die Ordnungsnummer einer vorhergehenden Übertragung der in Frage stehenden Nachricht im Verlauf der Periode und die Ordnungsnummer der Wiederholung.

10. Verfahren nach Anspruch 1, 2 oder 4, **dadurch gekennzeichnet**, daß jede Kennzeichnungsnachricht in mehrere Blöcke eingeteilt wird, die nacheinander auf dem Funkkanal übertragen werden und unabhängig voneinander von den Mobilstationen empfangen werden können, daß der erste Block der Kennzeichnungsnachricht einen Kopfteil mit einer Anzeige der Anzahl von Nachrichtenübertragungen im Verlauf der zugehörigen Kennzeichnungsperiode einschließt, und ein Anzeigefeld von neuen Übertragungen mit einer Folge von Bit, die jeweils für eine der im Kopfteil aufgezählten Übertragungen anzeigen, ob sie einer schon im Verlauf der vorhergehenden Kennzeichnungsperiode übertragenen Dienstnachricht entspricht, daß die Kennzeichnungsnachricht nach dem Kopfteil und dem Anzeigefeld von neuen Übertragungen Informationen in bezug auf Übertragungen von Dienstnachrichten, die nicht im Verlauf der vorhergehenden Kennzeichnungsperiode übertragen worden sind, einschließt, und danach Informationen in bezug auf andere Übertragungen als die Übertragungen von Dienstnachrichten, die nicht im Verlauf der vorhergehenden Kennzeichnungsperiode übertragen worden sind.

11. Verfahren nach Anspruch 10, **dadurch gekennzeichnet**, daß die Informationen in bezug auf Übertragungen von Dienstnachrichten, die nicht im Verlauf der vorhergehenden Kennzeichnungsperiode übertragen worden ist, für jede dieser Übertragungen in einer Reihenfolge, die von der Reihenfolge bestimmt wird, in der sie im Verlauf der Kennzeichnungsperiode eintreten, ein Bit umfassen, dessen Wert anzeigt, ob sie eine Wiederholung einer schon im Verlauf der Periode übertragenen Dienstnachricht ist, und eine Information, die entweder aus einer Kategorieinformation besteht, die die Art von Dienstnachricht darstellt, wenn die Übertragung keine Wiederholung einer schon im Verlauf der Periode übertragenen Dienstnachricht ist, oder aus der Ordnungsnummer einer vorhergehenden Übertragung der in Frage stehenden Nachricht im Verlauf der Periode, wenn die Übertragung eine Wiederholung einer schon im Verlauf der Periode übertragenen Dienstnachricht ist.

12. Verfahren nach einem der Ansprüche 8 bis 11, **dadurch gekennzeichnet**, daß die Informationen in bezug auf andere Übertragungen als die Übertragungen von Dienstnachrichten, die nicht im Verlauf der vorhergehenden Kennzeichnungsperiode übertragen worden sind, für jede dieser Übertragungen betreffs einer Dienstnachricht in einer Reihenfolge, die von der Reihenfolge bestimmt wird, in der sie im Verlauf der Kennzeichnungsperiode eintreten, ein Bit umfassen, dessen Wert anzeigt, ob sie eine Wiederholung einer schon im Verlauf der Periode übertragenen Dienstnachricht ist, und eine Information, die entweder aus einer Kategorieinformation besteht, die die Art von Dienstnachricht darstellt, wenn die Übertragung keine Wiederholung einer schon im Verlauf der Periode übertragenen Dienstnachricht ist, oder aus der Ordnungsnummer einer vorhergehenden Übertragung der in Frage stehenden Nachricht im Verlauf der Periode, wenn die Übertragung eine Wiederholung einer schon im Verlauf der Periode übertragenen Dienstnachricht ist.

13. Verfahren zur Nachrichtenübertragung aus einer Infrastruktur eines Funknetzes mit Vielfachzugriff im Zeitmultiplex zu Mobilstationen, wobei die Nachrichten nacheinander in regelmäßigen Zeitabständen zu den Mobilstationen auf einem bestimmten Funkkanal (CBCH) übertragen werden, und mit Dienstnachrichten und Kennzeichnungsnachrichte:n, die jeweils mit den aufeinanderfolgenden Kennzeichnungsperioden verbunden sind, wobei jede Kennzeichnungsnachricht Informationen über die Aufteilung der Dienstnachrichten trägt, die im Verlauf der zugehörigen Kennzeichnungsperiode übertragen werden, **dadurch gekennzeichnet**, daß, da mindestens gewisse der Dienstnachrichten mehrere Male im Verlauf derselben Kennzeichnungsperiode übertragen worden sein können, die mit dieser Periode verbundene Kennzeichnungsnachricht Daten einschließt, die gegebenenfalls die Übertragungen von Dienstnachrichten anzeigen, die Wiederholungen von Dienstnachrichten sind, die schon im Verlauf der Periode übertragen worden sind, und daß, wenn die Kennzeichnungsnachricht eine Information einschließt, die anzeigt, daß eine Dienstnachrichtenübertragung eine Wiederholung einer schon im Verlauf der zugehörigen Kennzeichnungsperiode übertragenen Dienstnachricht ist, sie außerdem für diese eine Wiederholung darstellende Übertragung die Ordnungsnummer einer vorhergehenden Übertragung der in Frage stehenden Nachricht im Verlauf der Periode einschließt.

14. Basisstation für ein zellulares Funknetz mit Vielfachzugriff im Zeitmultiplex mit Funksende- und - empfangsmitteln zum Kommunizieren mit Mobilstationen auf mehreren Funkkanälen und Mitteln (5, 6) zum Ausbilden einer Folge von Nachrichten, die in regelmäßigen Zeitabständen auf einem der Funkkanäle (CBCH) übertragen werden, wobei diese Nachrichten Dienstnachrichten und Kennzeichnungsnachrichten umfassen, wobei die Ausbildungsmittel die gemäß Kennzeichnungsnachrichten so aufbauen, daß sie eine Struktur einem der Ansprüche 1 bis 13 aufweisen.

15. Funkverbindungs-Mobilstation mit Vielfachzugriff im Zeitmultiplex mit Sende- und Empfangsmitteln zum Kommunizieren mit einer Basisstation eines zellularen Funknetzes, die in regelmäßigen Zeitabständen auf einem bestimmten Funkkanal (CBCH) Dienstnachrichten und Kennzeichnungsnachrichten gemäß einem der Ansprüche 1 bis 12 überträgt, Mitteln (12, 13) zum Empfang und der Auswertung der Nachrichten, die funktionieren, wenn die Mobilstation nicht in Kommunikation steht, und Mitteln (17) zur Auswertung der Kennzeichnungsnachrichten zum Unterbrechen der Funktion der Mittel zum Empfangen und zur Auswertung zu Zeitpunkten in jeder Kennzeichnungsperiode, die aus der zugehörigen Kennzeichnungsnachricht bestimmt werden, wenn die Basisstation eine schon im Verlauf der vorhergehenden Kennzeichnungsperiode übertragene und von der Mobilstation schon im Verlauf der vorhergehenden Kennzeichnungsperiode oder zuvor empfangene Dienstnachricht nochmals überträgt.
